**Europäisches Patentamt**

**European Patent Office**

**Office européen des brevets**

(11) Veröffentlichungsnummer: **0 232 911**

**A1**

(12) # EUROPÄISCHE PATENTANMELDUNG

(21) Anmeldenummer: **87101912.1**

(22) Anmeldetag: **11.02.87**

(51) Int. Cl.⁴: **F16B 12/04**

(30) Priorität: **12.02.86 SE 8600619**

(43) Veröffentlichungstag der Anmeldung:
**19.08.87 Patentblatt 87/34**

(84) Benannte Vertragsstaaten:
**AT BE CH DE ES FR GB IT LI NL SE**

(71) Anmelder: **Sedaplast AB**
**Sägargatan 4**
**S-332 00 Gislaved(SE)**

(72) Erfinder: **Gustafsson, Bror**
**Högasstigen 16**
**S-332 00 Gislaved(SE)**

(74) Vertreter: **Patentanwälte Dr. Ing. Eugen Maier**
**Dr. Ing. Eckhard Wolf**
**Pischekstrasse 19**
**D-7000 Stuttgart 1(DE)**

(54) **Verbindungsbolzen.**

(57) Zur sicheren Verbindung zweier insbesondere aus Holz bestehender Teile beispielsweise eines Möbelstücks dient ein in Aussparungen (13) der beiden Teile einsteckbarer, mit den beiden Teilen verleimbarer, symmetrisch ausgebildeter Verbindungsbolzen (10), der zwei axiale Sackbohrungen - (15) aufweist, die eine Menge Klebstoff (29) enthalten und mittels je eines in der Ausgangsstellung über die Sackbohrungen (15) überstehenden, mittels eines Ringwulstes (26) dichtend gegen die Innenwandung der Sackbohrungen (15) anliegenden Kolbens (24) verschlossen sind. Die Sackbohrungen - (15) weisen einen inneren Teil (19) und einen äußeren Teil (18) auf, der einen kleineren Durchmesser als der innere Teil (19) aufweist, so daß der Kolben (24) sich beim Einpressen des Bolzens (10) in die Aussparung (13) gegen den Boden der Sackbohrung (15) bewegt und hierbei der Klebstoff (29) über an der Innenwandung des Teils (19) der Sackbohrung (15) ausgesparte achsparallele Kanäle (21) und über am Außenumfang des Kolbens (24) ausgesparte achsparallele Nuten (25) an die stirnseitigen Enden des Verbindungsbolzens (10) und an die gegeneinander anliegenden zylindrischen Flächen des Verbindungsbolzens (10) und der Aussparung (13) gepresst wird.

FIG.5

## Verbindungsbolzen

Die Erfindung betrifft einen Kräfte aufnehmenden und übertragenden, in eine zylindrische Aussparung, zum Beispiel eines Teils eines Möbelstücks einsteckbaren oder einleimbaren Verbindungsbolzen oder -zapfen.

In der PCT-Anmeldung SE79/00231 ist ein Verbindungselement mit einer doppelten Wand beschrieben, in deren Zwischenraum eine bestimmte Menge Klebstoff eingebracht wird und deren Querschnittsabmessungen größer sind als diejenigen der das Verbindungselement aufnehmenden Aussparung, so daß beim Einführen des Verbindungselementes die Wände gegeneinander gepresst werden und dabei der Klebstoff durch in der Außenwand vorgesehene Löcher auf die Außenfläche des Verbindungselements gelangt. Der hierbei verwendete Klebstoff ist vorzugsweise ein inaktiver Klebstoff bekannter Art, der ohne den Zusatz eines Härters, sondern lediglich unter der Einwirkung der Luftfeuchtigkeit aushärtet. Es kann aber auch ein Klebstoff Verwendung finden, der bei Berührung mit metallischen Oberflächen aushärtet.

Dieses bekannte Verbindungselement weist aber ebene Begrenzungsflächen auf und ist daher zum Einsatz in zylindrische Aussparungen nicht geeignet.

Der Erfindung liegt daher die Aufgabe zugrunde, einen Kräfte aufnehmenden Verbindungsbolzen der vorgenannten Art zu schaffen, mit dem ebenfalls beim Einführen des Bolzens in eine Bohrung eine bestimmte Menge Klebstoff in diese eingebracht wird und sich zwischen der Außenfläche des Verbindungsbolzens und der Innenwandung der Bohrung ausbreitet. Zu diesem Zweck weist der Verbindungsbolzen vorteilhafterweise die Gestalt eines Dübels mit zwei gleichen Hälften auf. Der Verbindungsbolzen kann aber auch die Gestalt eines beliebigen Verankerungselementes aufweisen, das zur Aufnahme einer Schraube oder eines Hakens dient.

Diese Aufgabe wird gemäß der Erfindung dadurch gelöst, daß der Verbindungsbolzen oder -zapfen eine am einsteckseitigen Ende offene axiale Bohrung aufweist, die eine bestimmte Menge flüssigen Klebstoffs enthält und mittels eines in der Ausgangsstellung nur zum Teil in sie hineinragenden Kolbens abgedichtet ist, und daß die Bohrung und der Kolben so ausgebildet sind, daß beim Einpressen des Kolbens in die Bohrung der im rückwärtigen Teil der Bohrung zwischen dem Boden der Bohrung und dem inneren Ende des Kolbens vorhandene Klebstoff längs des Umfangs des Kolbens bis zum einsteckseitigen Ende des Bolzens fließt.

Vorteilhafte Ausgestaltungen des erfindungsgemäßen Verbindungsbolzens ergeben sich aus den Unteransprüchen und sind im Folgenden anhand des in der Zeichnung in schematischer Weise dargestellten Ausführungsbeispiels des Verbindungsbolzens erläutert. Es zeigen

Fig. 1 einen Längsschnitt durch den Verbindungsbolzen nach der Schnittlinie 1 -1 der Fig. 2,

Fig. 2 einen Querschnitt nach der Schnittlinie 2 -2 der Fig. 1,

Fig. 3 einen Längsschnitt durch einen der Kolben nach der Schnittlinie 3 -3 der Fig. 4,

Fig. 4 einen Querschnitt durch einen Kolben nach der Schnittlinie 4 -4 der Fig. 3,

Fig. 5 einen der Fig. 1 entsprechenden Längsschnitt durch den nur zum Teil in Aussparungen zweier miteinander zu verbindender Körper eingesetzten Verbindungsbolzen,

Fig. 6 einen Längsschnitt durch den vollständig von den Aussparungen zweier miteinander verbundener Körper aufgenommenen Verbindungsbolzen,

Fig. 7 einen Längsschnitt durch den nur mit seinem einen Ende in eine Aussparung eines Körpers teilweise eingesteckten Verbindungsbolzen,

Fig. 8 einen Längsschnitt durch einen Kolben, der in Abweichung von den in den Fig. 1 bis 7 dargestellten Kolben eine axiale Bohrung zur Aufnahme des flüssigen Klebstoffs aufweist.

Der Bolzen 10 ist ein zwei gleiche Hälften 11, 12 aufweisender Doppelbolzen, der als Dübel zur Verbindung zweier Körper dienen kann. Eine Hälfte des Bolzens 10 kann auch massiv ausgebildet sein und zur Verankerung einer Schraube oder eines beliebigen anderen Verbindungsorgans dienen.

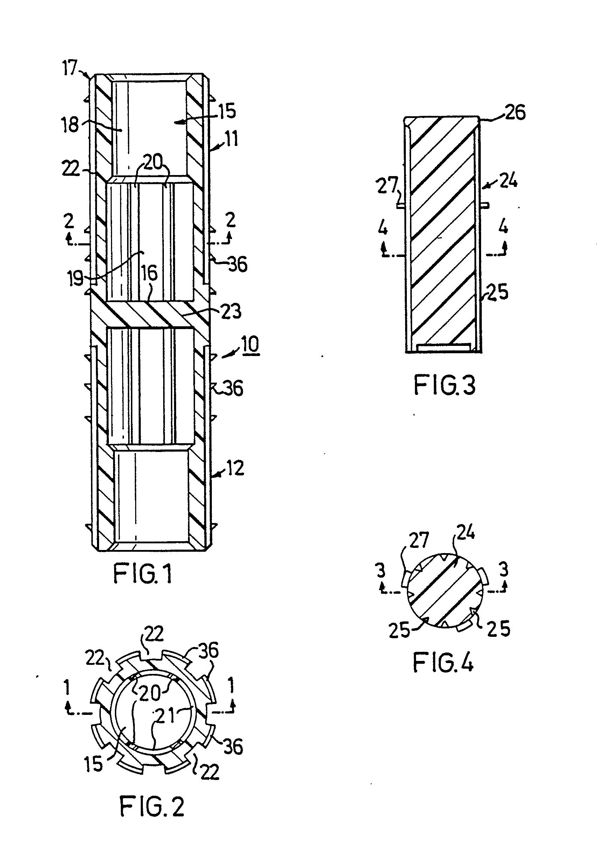

Da die beiden Hälften des Bolzens 10 spiegelbildlich ausgebildet sind, genügt es, zur näheren Beschreibung des Bolzens im folgenden nur die in Fig. 1 obere Hälfte 11 des Bolzens 10 zu beschreiben.

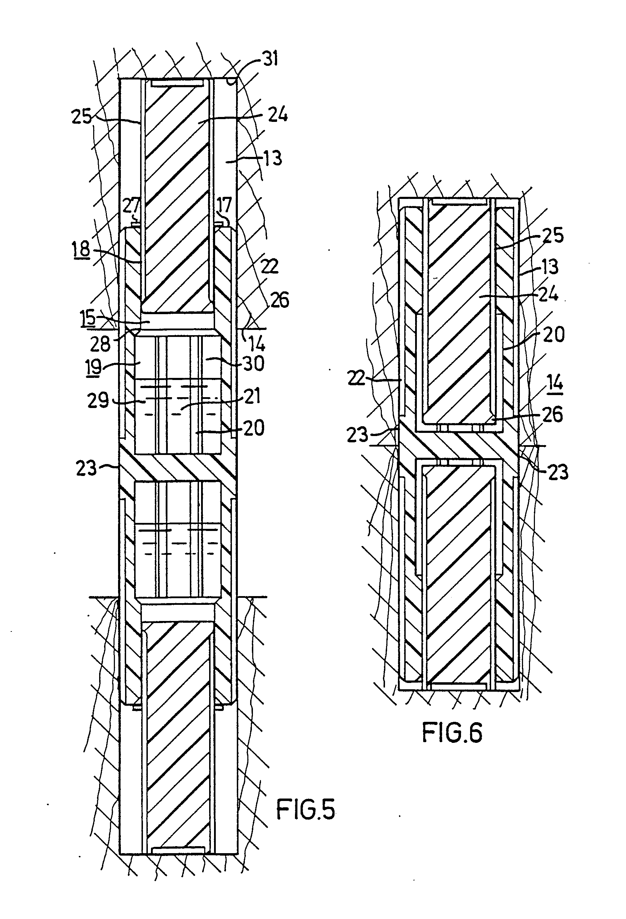

Der Bolzen 10 hat zylindrische Gestalt und wird in zylindrische Aussaprungen 13 von vorzugsweise aus Holz bestehenden Körpern 14 eingesetzt, wie dies in Fig. 5,6 und 7 dargestellt ist.

Der Bolzen 10 weist zwei zylindrische, nach den Stirnseiten 17 des Bolzens offene Bohrungen 15 auf, die durch einen Mittelsteg 13 voneinander getrennt sind. Die Bohrung weist in ihrem äußeren Teil 18 einen etwas größeren Durchmesser auf als in ihrem inneren Teil 19, der an seiner Innenwandung eine Mehrzahl achsenparalleler, Nuten 21 begrenzender Stege 20 aufweist, deren nach innen gerichteten Flächen auf einem Flugkreis liegen, dessen Radius mit dem Radius des äußeren Teils 18 der Bohrung 15 übereinstimmt.

Jede Hälfte des Bolzens 10 weist am Außenumfang eine Mehrzahl achsenparalleler Klebstoffkanäle 20 auf, die etwas kürzer sind als die Bohrung 15 und etwa auf der Höhe des Mittelstegs 23 des Bolzens enden.

Die Bohrung 15 nimmt einen zylindrischen Kolben 24 in sich auf, der die in den Fig. 3 und 4 dargestellte Gestalt aufweist. Der Kolben 4 ist etwas länger als die Bohrung 15, wie dies aus Fig. 6 ersichtlich ist, die den Kolben 24 in einer Lage zeigt, in der er sich nahezu vollständig in der Bohrung 15 befindet, wobei er beim Einpressen ziemlich genau an der Innenwandung des äußeren Teils 18 der Bohrung 15 und an den Stegen 20 des inneren Teils 19 der Bohrung 15 gleitet. Der Bolzen 10 ist auf diese Weise in der Aussparung des Körpers 14 wirksam verstemmt, da der Kolben 24 in Verbindung mit dem Bolzen 10 in der Lage ist, Biege-und Knickkräfte aufzunehmen.

Wie aus den Fig. 3 und 4 ersichtlich ist, weist der Kolben 24 an seinem Umfang eine Mehrahl achsenparalleler Klebestoffkanäle 25 auf, deren Querschnitt sich nach außen erweitert. Diese Kanäle 25 erstrecken sich in axialer Richtung bis nahe an das innere Ende des Kolbens, an welchem dieser einen verhältnismäßig schmalen Kolbenring oder Wulst 26 aufweist, der dichtend gegen die Innenwandung des äußeren Teils 18 der Bohrung 15 anliegt.

Der Kolben 24 weist an seinem Umfang eine Mehrzahl kleiner Vorsprünge oder schmaler Flansche 27 auf, die beim Einführen des Kolbens 24 in die Bohrung 15 als Anschläge zur Begrenzung des Einführens des Kolbens 24 in die in Fig. 5 dargestellte Ausgangsstellung dienen, in der der Ringwulst 26 dichtend gegen die Wandung der Bohrung 15 am Übergang des äußeren Teils 18 in den inneren Teil 19 der Bohrung 15 anliegt.

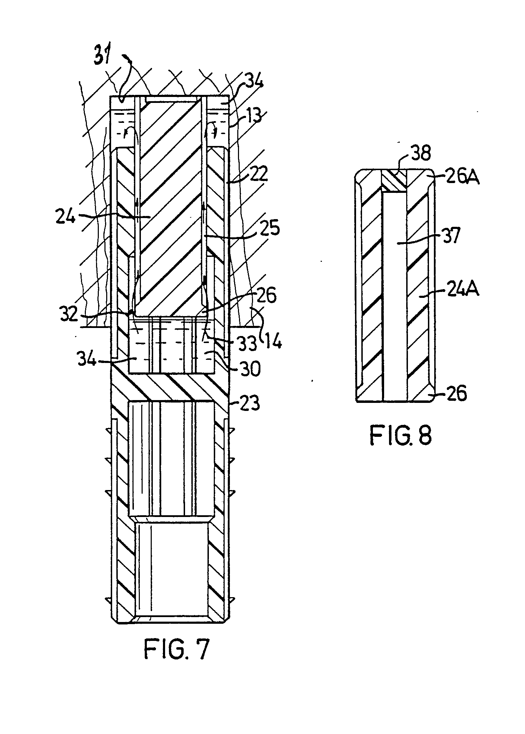

Ehe der Kolben 24 in die Bohrung 15 eingesetzt wird, wird in die Bohrung 15 eine Menge Klebstoffs 29 (Fig. 5) eingefüllt, der von etwa der Hälfte der Kammer 30 aufgenommen wird, die von dem inneren Ende des Kolbens 24 und dem Boden 16 der Bohrung 15 begrenzt wird. Die Menge Klebstoffs 29 hängt davon ab, wieviel dieses aus der Kammer 30 ausgepressten Klebstoffs 29 zu einer sicheren Verbindubng beispielsweise zweier Teile eines Möbelstücks benötigt wird. Wie aus Fig. 5 ersichtlich ist, liegt der Kolben 24 in der Ausgangsstellung gegen den Boden 31 der Aussparung 13 des einen mit dem anderen Teil zu verbindenden Teils 14 an. Wenn dann der Kolben 24 in diese Aussparung 13 gepresst wird, beispielsweise bis er die in Fig. 7 dargestellte Zwi schenstellung einnimmt, verläßt der Ringwulst 26 zuerst seine dichtende Lage und bewegt sich in den einen größeren Durchmesser aufweisenden inneren Teil 19 der Bohrung 15, so daß zwischen diesem inneren Teil 19 der Bohrung 15 und den Kanälen 25 am Umfang des Kolbens 24 über den so zwischen dem Außenumfang des Ringwulstes 26 und dem inneren Teil 19 der Bohrung 15 sich ausbildenden Ringspalt 32 eine Verbindung entsteht.

In der in Fig. 7 dargestellten Zwischenstellung des Kolbens 24 wird ein Teil des Klebstoffs 29 der Kammer 30 aus dieser an dem Ringwulst 26 vorbei in die Kanäle 25 gepresst, wie dies durch die Pfeile 33 angedeutet ist, aus welchem der Klebstoff 29 am inneren Ende des Kolbens 24 in die zwischen dem Boden 31 der Aussparung 13 und dem freien Ende des Kolbens 24 gebildete Kammer 34 fließt. Während des weiteren Einpressens des Kolbens 24 in die Aussparung 13 verkleinert sich das Volumen der Kammer 34, so daß der Klebstoff 29 aus dieser Kammer 34 in die am Umfang des Bolzens 10 gebildeten Kanäle 22 gepresst wird.

Die Kanäle 22 füllen sich allmählich mit dem Klebstoff 29 und sind zum Teil von dem Klebstoff 29 erfüllt, wenn der Bolzen 10 so weit in die Aussparung 13 eindringt, daß der zylindrische Teil 23 des Bolzens 10 die Aussparung 13 abdichtet. Beim weiteren Einpressen des Bolzens 10 wird der Klebstoff 29 aus den Kanälen 22 gepresst, und gelangt so aufgrund der Begrenzung der Kanäle 22 zwischen die gegeneinander anliegenden Flächen des Bolzens 10 und der Aussparung 13.

Der Bolzen 10 weist an seinem Außenumfang eine Mehrzahl Widerhaken bildender Vorsprünge 36 auf, die in die Wandung der Aussparung 13 eindringen und so eine zusätzliche Verankerung des völlig eingepressten Bolzens 10 in der Aussparung 13 bewirken, wie dies in Fig. 6 dargestellt ist, so daß der Bolzen 10 während der Zeit des Aushärtens des Klebstoffs 29 unverrückbar festgehalten wird.

Der in Fig. 8 abgebildete, eine Variante bildende Kolben 24A weist an seinen beiden Enden einen Ringwulst 26 und 26A sowie eine durchgehende axiale Bohrung 37 auf, aus der die Luft entweichen kann, wenn der Klebstoff 29, wie in Fig. 5 dargestellt, in die Kammer 30 eingefüllt wird und der Kolben in die in Fig. 5 dargestellte Ausgangslage gebracht wird. Darauf wird die Bohrung 37 an ihrem freien Ende mit einer Heißsiegelmasse 38 verschlossen.

**Ansprüche**

1. Kräfte aufnehmender, in eine zylindrische Aussparung z.B. eines Teils eines Möbelstücks einsteckbarer oder einleimbarer Verbindungsbolzen oder -zapfen, **dadurch gekennzeichnet**, daß
-der Bolzen (10) eine am einsteckseitigen Ende offene axiale Bohrung (15) aufweist, die eine bestimmte Menge flüssigen Klebstoffs (29) enthält und mittels eines in der Ausgangsstellung nur zum Teil in die Bohrung (15) hineinragenden Kolbens - (24) nach außen abgedichtet ist, und
-die Bohrung (15) und der Kolben (24) so ausgebildet sind, daß beim Einpressen des Kolbens (24) in die Bohrung (15) der am rückwärtigen Ende der Bohrung (15) in einer von dem Boden (16) der Bohrung (15) und dem inneren Ende (26) des Kolbens (24) begrenzten Kammer (30) vorhandene Klebstoff (29) längs des Umfangs des Kolbens - (24) bis zum einsteckseitigen Ende (17) des Bolzens (10) fließt.

2. Verbindungsbolzen nach Anspruch 1, **dadurch gekennzeichnet**, daß der Kolben (24) an seinem inneren Ende einen in der Ausgangsstellung des Kolbens (24) gegen die Wandung der Bohrung (15) anliegenden dichtenden Ringwulst - (26) und an seinem Umfang eine Mehrzahl achsenparalleler, von dem Ringwulst (26) bis zu dem äußeren Ende des Kolbens (24) sich erstreckender Kanäle (25) aufweist, so daß, wenn der Kolben - (24) von der dichtenden Ausgangsstellung in die Bohrung (15) gepresst wird, eine Verbindung zwischen den am Umfang des Kolbens (24) vorgesehenen Kanäle (25) und der Kammer (30) gebildet wird, so daß der Klebstoff (29) während des Einpressens des Kolbens (24) in seine Endlage durch die Kanäle (25) an das Ende des Bolzens (10) gepresst wird.

3. Verbindungsbolzen nach Anspruch 2, **dadurch gekennzeichnet**, daß ein innerer Teil (19) der Bohrung (15), der sich von der Stelle einwärts erstreckt, an der der Ringwulst (26) in der Ausgangsstellung dichtend gegen die Wandung der Bohrung (15) anliegt, mindestens an einigen Stellen einen größeren Durchmesser aufweist als der Außendurchmesser des Ringwulstes (26), so daß für den Klebstoff (29) am Außenumfang des Ringwulstes (26) ein Durchlaß geschaffen wird, wenn der Kolben (24) von seiner Ausgangsstellung aus nach innen gepresst wird, und der Ringwulst - (26) in den inneren Teil (19) der Bohrung (15) gelangt.

4. Verbindungsbolzen nach Anspruch 3, **dadurch gekennzeichnet**, daß der innere Teil - (19) der Bohrung (15) eine Mehrzahl achsenparalleler Stege (20) aufweist, deren nach innen gerichtete Flächen auf einem Flugkreis liegen, dessen Radius mit dem Innenradius des äußeren Teils - (18) der Bohrung (15) übereinstimmt, wobei die durch die Stege (20) gebildeten Kanäle (21) in Verbindung mit den Kanälen (25) am Außenumfang des Kolbens (24) stehen, wenn der Kolben (24) in die den Klebstoff (29) aufnehmende Kammer (30) gepresst wird.

5. Verbindungsbolzen nach einem der Ansprüche 1 bis 4, **dadurch gekennzeichnet**, daß der Bolzen an seinem Außen umfang eine Mehrzahl achsenparalleler, nach dem Einsteckende des Bolzens (10) offener Kanäle (22) aufweist.

6. Verbindungsbolzen nach Anspruch 5, **dadurch gekennzeichnet**, daß die am Außenumfang des Bolzens (10) vorgesehenen Kanäle (22) eine vorgegebene Länge aufweisen und auf Höhe des den Boden der inneren Teile - (19) der Bohrungen (15) bildenden Mittelstegs (23) des Bolzens (10) enden, der im Bereich dieses Mittelstegs (23) dichtend gegen die Aussparung - (13) anliegt, wenn der Bolzen (10) in seine Endlage gelangt, wobei die Länge der Kanäle (22) vorzugsweise etwas kürzer bemessen ist als die bis zu dem Mittelsteg (23) reichende Tiefe der Bohrungen (15).

7. Verbindungsbolzen nach einem der Ansprüche 1 bis 6, **dadurch gekennzeichnet**, daß der Bolzen (10) an seinem Außenumfang kleine Vorsprünge oder Flansche (36) aufweist, die in die Wandung der Aussparung (13) eingreifen und den Bolzen (10) in der Aussparung (13) verankern, damit dieser während des Aushärtens des Klebstoffs (29) seine Lage nicht verändert.

8. Verbindungsbolzen nach einem der Ansprüche 1 bis 7, **dadurch gekenzeichnet**, daß der Kolben (24) in einer radialen Ebene eine Mehrzahl von Vorsprüngen, Flanschen oder dergleichen (27) aufweist, die beim Einführen des Kolbens (24) in seine Ausgangsstellung diesem als Anschlag dienen, das Einpressen des Kolbens (24) jedoch nicht behindern, wenn der Bolzen (10) in die Aussparung (13) eingepresst wird.

9. Verbindungsbolzen nach einem der Ansprüche 1 bis 8, **dadurch gekennzeichnet**, daß der Bolzen (10) zwei spiegelbildlich ausgebildete Hälften (11,12) aufweist, deren jede einen Kolben - (24) aufnimmt.

10. Verbindungsbolzen nach einem der Ansprüche 1 bis 8, **dadurch gekennzeichnet**, daß die eine, in eine Aussparung (13) einzupressende Hälfte des Bolzens (10) eine Bohrung (15) zur Aufnahme eines Kolbens (24) aufweist und die andere, massiv ausgebildete Hälfte der Verankerung eines Befestigungsorgans, z.B. einer Schraube, eines Hakens oder dergleichen dient.

11. Verbindungsbolzen nach einem der Ansprüche 1 bis 10, **dadurch gekennzeichnet**, daß er mindestens einen Kolben (24A) aufweist, der eine durchgehende axiale Bohrung (37) aufweist, die an ihrem einen, einsteckseitigen Ende verschlossen wird, nachdem der Kolben (24A) in seine Ausgangsstellung gebracht wurde.

12. Verbindungsbolzen nach einem der Ansprüche 1 bis 11, **dadurch gekennzeichnet**, daß der Kolben (24, 24A) an beiden Enden einen dichtenden Ringwulst (26, 26A) aufweist.

FIG.1

FIG.2

FIG.3

FIG.4

0 232 911

FIG.5

FIG.6

FIG. 7

FIG. 8

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | GB-A-1 454 264 (THE BRITISH ALUMINIUM CO.) * Figur 2 * | 1 | F 16 B 12/04 |
| A | DE-A-1 400 906 (SCHARMANN & CO.) * Anspruch 1 * | 1 | |
| A | DE-A-2 646 351 (DIETIKER & CO.) * Anspruch 1 * | 1,2 | |
| A | US-A-3 756 635 (BEERS) * Zusammenfassung * | 1 | |
| A | WO-A-8 000 993 (BRAXELL) | | |

----- 

RECHERCHIERTE SACHGEBIETE (Int. Cl.4)

F 16 B 12/04

Der vorliegende Recherchenbericht wurde für alle Patentansprüche erstellt.

| Recherchenort | Abschlußdatum der Recherche | Prüfer |
|---|---|---|
| BERLIN | 28-04-1987 | ZAPP E |